# EUROPÄISCHE PATENTSCHRIFT

(11) **EP 2 313 698 B1**
(45) Veröffentlichungstag und Bekanntmachung des Hinweises auf die Patenterteilung: **29.07.2015**
(21) Anmeldenummer: 09781733.2
(22) Anmeldetag: 12.08.2009
(51) Int. Cl.: F24H 8/00, F24H 9/00, F24H 1/32

(54) **GLIEDERHEIZKESSEL AUS GUSSEISEN ODER ALUMINIUM**
CAST IRON OR ALUMINUM SECTIONAL BOILER
CHAUDIÈRE SECTIONNÉE EN FONTE OU EN ALUMINIUM

(30) Priorität: 14.08.2008 DE 102008037762
(43) Veröffentlichungstag der Anmeldung: 27.04.2011
(73) Patentinhaber: Robert Bosch GmbH, 70442 Stuttgart (DE)
(72) Erfinder: RAUSCH, Rainer, 36304 Alsfeld (DE); JUNG, Gerhard, 35112 Fronhausen (DE); HENRICH, Holger, 35633 Lahnau (DE)
(86) Internationale Anmeldenummer: PCT/EP2009/060416
(87) Internationale Veröffentlichungsnummer: WO 2010/018187

(56) Entgegenhaltungen:
- EP-A2- 0 062 110
- EP-A2- 0 745 813
- EP-A2- 1 912 027
- DE-A1- 10 103 277
- DE-C1- 10 142 551
- DE-U1- 8 634 369
- US-A- 2 935 052

## Beschreibung

Die Erfindung betrifft einen Gliederheizkessel aus Gusseisen oder Aluminium, insbesondere einen Brennwertkessel, nach dem Oberbegriff des Patentanspruches 1.

Derartige Gliederheizkessel bestehen aus mehreren einstückig gegossenen Kesselgliedern, welche hintereinander angeordnet und wasserseitig durch Naben miteinander verbunden sind. Dabei werden die von den Kesselgliedern gebildeten Wasserkanäle und -taschen zwischen dem Rücklaufanschluss und dem Vorlaufanschluss durchströmt. In der Regel besitzen gattungsgemäße Gliederheizkessel einen unteren Rücklaufanschluss und einen oben angeordneten Vorlaufanschluss, vorzugsweise in der jeweiligen Nabe. Die Heizgase strömen vom Brennraum über nachgeschaltete Heizgaszüge zu einem Abgasstutzen und geben auf Ihrem Weg Wärme an das Kesselwasser ab.

Bei allen bisherigen Kesseln dieser Art sind die Glieder in Reihe hintereinander angeordnet. Es gibt ein ringförmiges Vorderglied, an dem eine Brennraumtür oder eine Brennerplatte befestigt werden können, je nach Leistungsgröße ein oder mehrere ähnlich gestaltete Mittelglieder sowie ein Hinterglied. Dabei erstreckt sich der Brennraum durch Vorder- und Mittelglieder bis zum Hinterglied, welches mit seiner deckelförmigen Gestaltung den Boden des Brennraumes bildet. Alle Kesselglieder besitzen bei diesen Ausführungsformen ähnliche äußere Abmessungen, weil sie über den gesamten Kesselquerschnitt Teile von Brennraum, Heizgaszügen und Wasserraum bilden. Weiterhin sind auch Kessel für niedrige Leistungsbereiche bekannt, die aus nur zwei oder gar nur einem Kesselglied bestehen.

Hinsichtlich der Abgasführung und des Wirkungsgrades der Heizgeräte unterscheidet man zwischen Heizwerttechnik und Brennwerttechnik. Aus Gründen der Energieeinsparung kommen immer mehr Brennwertheizgeräte zur Anwendung. Der Aufbau ihres Wärmetauschers gewährt die Möglichkeit, die im Betrieb bei der Verbrennung von Brennstoff und Luft entstehenden feuchten Abgase unter den Abgastaupunkt abzukühlen. Dabei kondensiert die Feuchtigkeit der Abgase aus und es wird zusätzlich zur fühlbaren Wärme die Kondensationswärme auf das Heizwasser übertragen.

Bei einer Verwendung als Brennwertkessel muss besonderen Wert auf die Werkstoffauswahl gelegt werden, denn auf Grund der Zusammensetzung des verwendeten Brennstoffs und der Verbrennungsführung sind die Abgase schadstoffbelastet und das anfallende Kondenswasser weist verschiedene Säuren in geringer Konzentration auf. Die von Kondenswasser berührten Bauteile wie Heizflächen, Abgassammler und Abgasleitung müssen also gegenüber den Säuren resistent sein, weshalb es üblich ist, diese Bauteile aus Edelstahl, Aluminium oder Kunststoff zu fertigen. Speziell in der Ölbrennwerttechnik kommen im Allgemeinen geschweißte Edelstahlwärmetauscher zur Anwendung, wie beispielsweise auch in der DE 10 2004 023 711 B3 als Spiralrohrwicklung offenbart. Sie bieten den Vorteil, die Säurebelastung ohne Korrosion zu ertragen. Nachteilig sind die mit dem Werkstoff verbundenen hohen Kosten sowie besonders bei Schweißkonstruktionen aus Blechen die ungünstigeren Skalierbedingungen und die größeren, in räumlich engen Verhältnissen schwer montierbaren Baugrößen.

Die Wärmetauscher konventioneller Heizwertgeräte werden häufig aus Gusseisen hergestellt. Sie zeichnen sich durch hohe Robustheit und lange Lebensdauer aus. Ihr Aufbau aus zumeist identischen Gusssegmenten erlaubt eine kostengünstige Fertigung und leichte Skalierbarkeit hinsichtlich unterschiedlicher Leistungsgrößen und bietet gute Montagemöglichkeiten selbst unter engen Aufstellbedingungen. Der Werkstoff erträgt die kurzen Abgaskondensationsphasen bei Betriebsstart und kaltem Wärmetauscher sehr gut. Lediglich für den Brennwertbetrieb mit länger anhaltendem Kondenswasseranfall ist Gusseisen in seiner heutigen Form und Gestaltung nicht geeignet.

Weiterhin ist aus der DE 296 21 817 U1 ein Brennwertheizkessel mit integriertem und hydraulisch nachgeschaltetem Kompaktwärmetauscher aus korrosionsbeständigem Werkstoff bekannt. Dieser Kompaktwärmetauscher ist als separates Bauteil von zwei schalenförmigen Kesselgliedern umschlossen und wasserseitig gesondert angeschlossen. Alle Kessel mit nachgeschaltetem Wärmetauscher haben die Nachteile, dass der Montageaufwand durch die erforderlichen Rohrteile erhöht wird und der wasserseitige Widerstand ansteigt. Die Anordnung als separates, außen liegendes Bauteil bewirkt ebenfalls Abkühlverluste, die durch eine geeignete Wärmedämmung vermindert werden müssen.

Ferner sind aus der DE10142551 (C1), EP0062110 (A2), DE8634369 (U1), DE10103277 (A1), US2935052 (A), EP1912027 (A2), EP0745813 (A2) weitere verschiedene Kessel bekannt. Das Dokument DE 10142551 (C1) offenbart den Oberbegriff des Anspruchs 1.

Der Erfindung liegt die Aufgabe zugrunde, einen Gliederheizkessel aus Gusseisen oder Aluminium insbesondere im Hinblick auf Kompaktheit und Robustheit zu optimieren.

Erfindungsgemäß wird dies mit den Merkmalen des Patentanspruches 1 gelöst. Vorteilhafte Weiterbildungen sind den Unteransprüchen zu entnehmen.

Zum Ausbilden eines ringförmigen Spaltes weisen jeweils zwei benachbarte Glieder vorzugsweise eine einander zugeordnete Geometrie auf. Dazu sind verschiedene Ausführungsformen möglich, nämlich dass erstens ein ringförmiger Spalt im rechten Winkel zur Mittelachse des Brennraumes im Primärabschnitt radial und gerade nach außen und im Sekundärabschnitt nach innen verläuft. Bei einer zweiten Variante ist ein ringförmiger Spalt radial gekrümmt und verläuft bogenförmig, ähnlich einer Turbinenschaufel-Geometrie, im Primärabschnitt radial gekrümmt nach außen und im Sekundärabschnitt nach innen. In einer dritten Ausführungsform ist vorgesehen, dass ein ringförmiger Spalt mit Schrägstellung zur Mittelachse des Brennraumes im Primärabschnitt mit Schrägstellung zur Mittelachse des Brennraumes gerade nach außen und im Sekundärabschnitt nach innen verläuft. Dies bietet sich bei eine stehenden Anordnung des gesamten Gliederblockes besonders an, weil dann Kondensat ringsum aus einem Spalt gut nach unten ablaufen kann. Weiterhin kann ein ringförmiger Spalt in radialer Richtung auch im Primärabschnitt in radialer Richtung wellenförmig nach außen und im Sekundärabschnitt nach innen verlaufen, insbesondere um innerhalb eines Spaltes die Strömungsturbulenz zu erhöhen, damit an den Oberflächen ein intensiver Wärmeübergang erreicht wird.

Vorteilhafterweise nehmen im Primärabschnitt die Breite und/oder der freie Querschnitt eines ringförmigen Spaltes vom Brennraum bis zur Ausmündung auf der Außenseite der Glieder hin ab, und im Sekundärabschnitt, vom Abgassammelraum bis zum Abgasstutzen nach innen hin ab. Damit wird eine Anpassung an das sich mit der Abkühlung entlang des gesamten Strömungsweges verringernde Heizgasvolumen erreicht. Die Heizgas berührten Oberflächen der Glieder, mindestens die den Spalt ausbildenden Oberflächen, können mit einer Korrosionsschutzbeschichtung versehen sein.

Zum Ausbilden einer Zwangsdurchströmung können die Naben zwischen Rücklauf- und Vorlaufanschluss wechselseitig, vorzugsweise alternierend oben und unten, verschlossen werden. Damit wird über die Länge des Gliederblockes eine alternierendes Überströmen zwischen zwei benachbarten Gliedern in der oberen und unteren Nabe sichergestellt.

Mindestens eine Nabe zwischen dem Primärabschnitt und dem Sekundärabschnitt ist vorzugsweise mit einem Verschlussmittel verschlossen. Außerdem ist vorzugsweise der Vorlaufanschluss im Bereich des Primärabschnittes und der Rücklaufanschluss im Bereich des Sekundärabschnittes angeordnet, so dass das kühlere Rücklaufwasser zuerst in den Sekundärabschnitt eintritt und danach in den Primärabschnitt durch mindestens eine Nabe überströmt. Dadurch wird im Sekundärabschnitt das Abgas bis nahe an die Eintrittstemperatur des Rücklaufwassers heruntergekühlt.

In einer Ausführungsform der Erfindung ist daher ein Brennraumboden-Mittelglied zusätzlich vorgesehen, welches zusammen mit dem Vorderglied, und mindestens einem Mittelglied den Brennraum bildet und diesen in der Tiefe begrenzt. Dabei gehören das Vorderglied und mindestens ein Mittelglied wasser- und heizgasseitig zum Primärabschnitt. Dagegen bilden das Hinterglied und das Brennraumboden-Mittelglied mindestens wasserseitig den Sekundärabschnitt, indem mindestens eine Nabe zwischen dem Brennraumboden-Mittelglied und dem benachbarten Mittelglied verschlossen ist.

In einer weiteren Ausgestaltung können das den Sekundärabschnitt bildende Hinterglied und das Brennraumboden-Mittelglied durch mindestens ein zugeordnetes weiteres Mittelglied ergänzt werden. Diese Glieder bilden zusammen mindestens wasserseitig den Sekundärabschnitt, wobei dann mehrere mit Rücklaufwasser umspülte Spalte für einen intensiven Wärmetausch zur Verfügung stehen.

Alternativ dazu können das den Sekundärabschnitt bildende Hinterglied und das Brennraumboden-Mittelglied durch mindestens ein zugeordnetes weiteres Mittelglied ergänzt werden, aber der Sekundärabschnitt wird mindestens wasserseitig nur vom Hinterglied zusammen mit mindestens einem zugeordneten weiteren Mittelglied gebildet. Dazu wird mindestens eine Nabe zwischen dem Brennraumboden-Mittelglied und dem benachbarten weiteren Mittelglied verschlossen. Das das Brennraumboden-Mittelglied ist in diesem Fall wasserseitig dem Primärabschnitt zugeordnet.

Der Abgasstutzen ist vorteilhafterweise auf der gemeinsamen Mittelachse von Gliedern und Brennraum angeordnet. Hinterglied, Brennraumboden-Mittelglied und das mindestens eine weitere Mittelglied besitzen in Verlängerung des Abgasstutzens mindestens eine Durchbrechung. Diese ist innerhalb des Brennraumboden-Mittelgliedes mit einem Verschlussstopfen heizgasseitig verschlossen, welcher zum Beispiel für Reinigungszwecke gelöst und entnommen werden kann.

Mit der Erfindung wird ein Gliederheizkessel mit bester Eignung für Brennwertbetrieb geschaffen, bei dem die positiven Werkstoffeigenschaften von Gusseisen oder Aluminium gezielt angewendet und genutzt werden, um gute Wärmeübertragungseigenschaften, Kompaktheit und Robustheit zu gewährleisten. Es werden Korrosion auslösende Belastungen aufgefangen. Auch die bevorzugte Korrosionsschutzbeschichtung selbst ist nicht nur einfach aufzubringen und zu kontrollieren, sondern sie wird auch in den Spalten vor möglichen mechanischen Belastungen geschützt.

Mit der Aufteilung der Wasser- und Heizgasseite in einen Primär- und einen Sekundärabschnitt wird ein intensiver, den in den jeweiligen Bereichen vorherrschenden Temperaturen optimal angepasster Wärmetausch erreicht. Daraus resultiert ein sehr hoher Wirkungsgrad, ohne dass die Komplexität der Bauteile steigt und ohne dass Einschränkungen bei der Reinigungsfähigkeit entstehen.

Die Gliederbauweise bietet neben der einfachen Herstellung auch den Vorteil, durch das Einfügen weiterer Mittelglieder unterschiedliche Längen für verschiedene Feuerungs- und Wärmetauscherleistungen variabel abzudecken. Trotzdem bleiben dann alle vorzugsweise stirnseitig angeordneten Anbauteile sowie die wasserseitigen Verbindungen gleich. Nur der umgebende Mantel um den Abgassammelraum variiert. Wegen der niedrigen Abgastemperaturen kann dieser sogar aus Kunststoff hergestellt werden.

Die Zeichnung stellt ein Ausführungsbeispiel der Erfindung dar. Es zeigt einen Gliederheizkessel aus Gusseisen oder Aluminium:
- Fig. 1:: in einer perspektivischen Gesamtansicht mit einem Schnitt im oberen Bereich,
- Fig. 2:: in einem vertikalen Längsschnitt durch eine Hälfte des gesamten Gliederblockes und
- Fig. 3:: mit einen Mittelglied in perspektivischer Darstellung.

Der Gliederheizkessel besteht im Wesentlichen aus ringförmigen Gliedern, nämlich einem Vorderglied 1, einem deckelförmigen Hinterglied 2 und mehreren Mittelgliedern 3. Diese bilden einen Brennraum 4 und deren ringförmige Wasserräume 5 stehen miteinander über Naben 6, 6' in Verbindung.

Erfindungsgemäß sind die Heizgaszüge in einen Primärabschnitt P und einen Sekundärabschnitt S unterteilt. Dafür ist ein Brennraumboden-Mittelglied 7 zusätzlich vorgesehen. Dieses bildet zusammen mit dem Vorderglied 1, und mindestens einem Mittelglied 3 den Brennraum 4 und begrenzt diesen in der Tiefe. Das Vorderglied 1 und mindestens ein Mittelglied 3 gehören somit wasser- und heizgasseitig zum Primärabschnitt, wogegen das Hinterglied 2 und das Brennraumboden-Mittelglied 7 mindestens wasserseitig den Sekundärabschnitt bilden. Dazu ist mindestens eine Nabe 6, 6' zwischen dem Brennraumboden-Mittelglied 7 und dem benachbarten Mittelglied 3 mit einem Verschlussmittel 8 verschlossen.

Als Heizgaszüge sind jeweils ringförmige Spalte 9, 10 zwischen zwei benachbarten Gliedern 1, 2, 3, 7 vorgesehen. Die Heizgaszüge verlaufen im Primärabschnitt P jeweils ausgehend vom Brennraum 4 etwa radial nach außen und münden in einen Abgassammelraum 11 auf der Außenseite der Glieder 1, 2, 3, 7 ein, wobei die Heizgase dort in den Sekundärabschnitt S überströmen. Im Sekundärabschnitt S verläuft ein Heizgaszug, ausgehend vom Abgassammelraum 8, zwischen Hinterglied 2 und dem Brennraumboden-Mittelglied 7 etwa radial nach innen zu einem Abgasstutzen 12 im Zentrum des Sekundärabschnittes S.

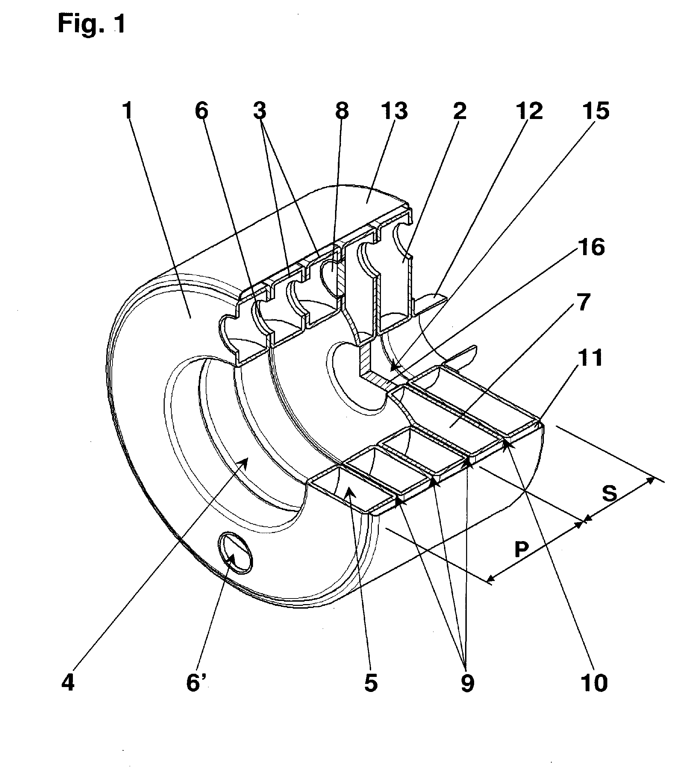

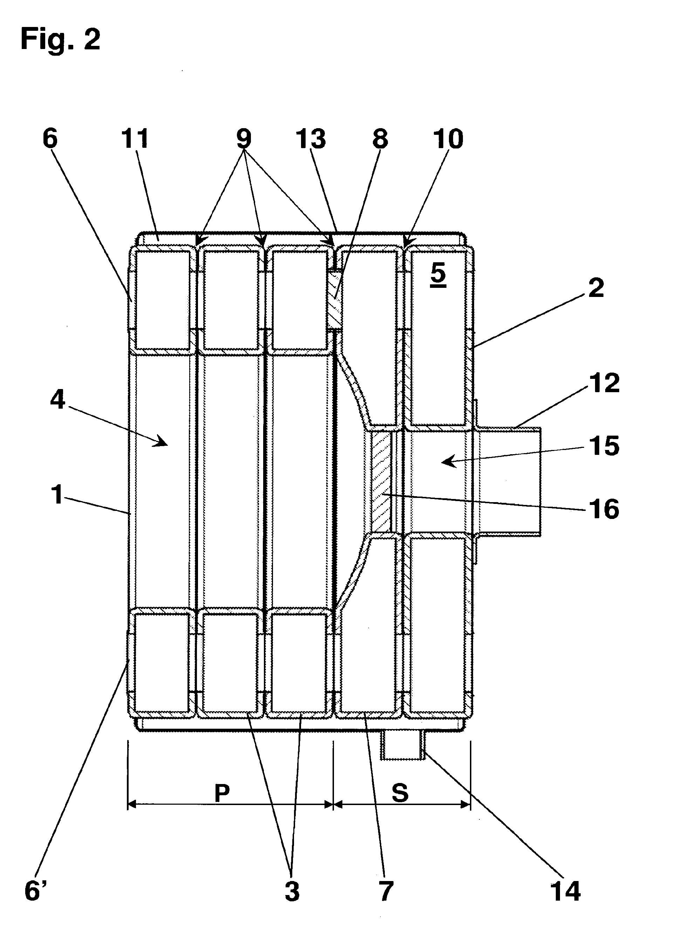

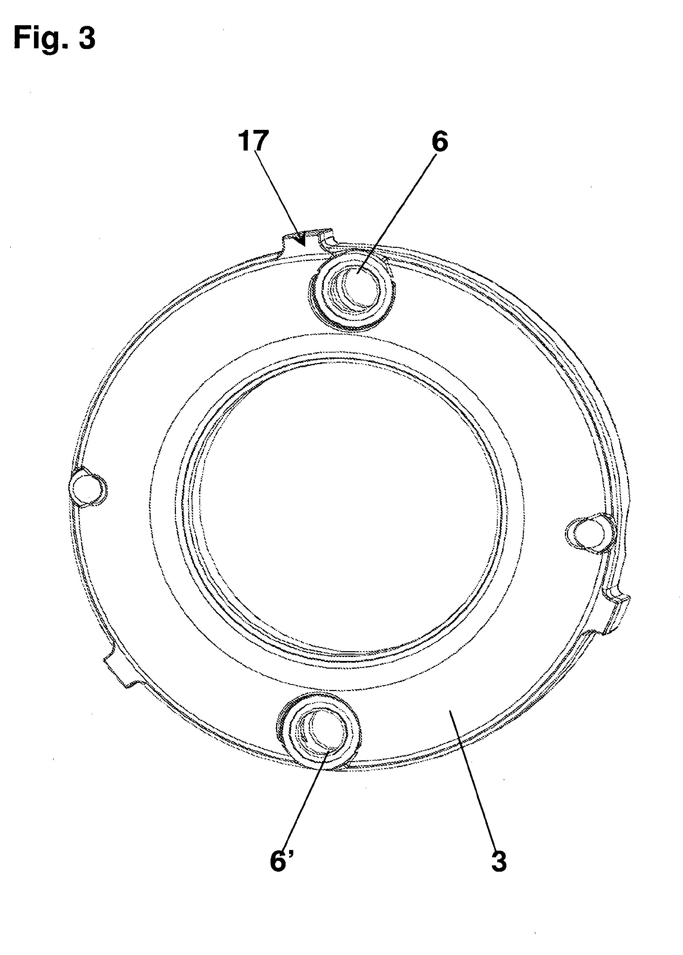

Zum Ausbilden eines ringförmigen Spaltes 9, 10 weisen jeweils zwei benachbarte Glieder 1, 2, 3, 7 eine einander zugeordnete Geometrie auf. Im dargestellten Ausführungsbeispiel gemäß den Fig. 1 und 2 entstehen vier radiale, ringförmige Spalte 9, 10, wobei speziell Fig. 3 ein Mittelglied 3 mit Wölbungen zeigt.

Der Abgassammelraum 11 erstreckt sich als Hohlzylinder um die äußeren Mantelflächen der Glieder 1, 2, 3, 7 und wird von einem Mantel 13 nach außen hin begrenzt. An diesem ist ein Kondenswasserablauf 14 vorgesehen.

Weil eine Nabe 6 zwischen dem Primärabschnitt P und dem Sekundärabschnitt S mit einem Verschlussmittel 8 verschlossen ist, gelangt das Rücklaufwasser vom nicht dargestellten Rücklaufanschluss zunächst nur in den Sekundärabschnitt S und strömt dann durch die verbleibende offene Nabe 6' in den Primärabschnitt P. Dieser steht mit dem nicht dargestellten Vorlaufanschluss in Verbindung.

Hinterglied 2 und Brennraumboden-Mittelglied 7 weisen in Verlängerung des Abgasstutzens 12 mindestens ein Durchbrechung 15 auf, welche innerhalb des Brennraumboden-Mittelgliedes 7 mit einem Verschlussstopfen 16 heizgasseitig verschlossen ist.

Weiterhin befinden sich gemäß Fig. 3 an jedem Glied 1, 2, 3, 7 zur Einhaltung eines genauen Spaltmaßes zwischen zwei benachbarten Gliedern 1, 2, 3, 7 drei Zentrierflächen 17 an angegossenen Nocken, um darüber die jeweils vorliegenden Abmessungen nach dem Gießvorgang genau zu identifizieren und für die Bearbeitung der Nabenbereiche heranzuziehen.

## Patentansprüche

1. Gliederheizkessel aus Gusseisen oder Aluminium, insbesondere Brennwertkessel, mit im Wesentlichen ringförmigen Gliedern (1, 2, 3, 7), wobei ein Vorderglied (1), ein Hinterglied (2) und mindestens ein Mittelglied (3) vorgesehen sind, die einen Brennraum (4) mit im Wesentlichen umgebenden Heizgaszügen bilden und deren ringförmige Wasserräume (5) miteinander über Naben (6, 6') in Verbindung stehen, mit einem Rücklaufanschluss und einem Vorlaufanschluss, einem Abgasstutzen (12),
wobei als Heizgaszüge jeweils ringförmige Spalte (9, 10) zwischen zwei benachbarten Gliedern (1, 2, 3, 7) vorgesehen sind, und dass die Heizgaszüge in einen Primärabschnitt (P) und einen Sekundärabschnitt (S) unterteilt sind, wobei im Primärabschnitt die Heizgaszüge jeweils ausgehend vom Brennraum (4) etwa radial nach außen verlaufen und in einen Abgassammelraum (11) auf der Außenseite der Glieder (1, 2, 3, 7) einmünden, wobei die Heizgase dort in den Sekundärabschnitt (S) überströmen und wobei im Sekundärabschnitt (S) mindestens ein Heizgaszug ausgehend vom Abgassammelraum (11) etwa radial nach innen zu einem Abgasstutzen (12) verläuft,
**dadurch gekennzeichnet, dass**
sich der Abgassammelraum (11) auf der Außenseite der Glieder (1, 2, 3, 7) als Hohlzylinder um die äußeren Mantelflächen der Glieder (1, 2, 3, 7) erstreckt und von einem Mantel (13) nach außen hin begrenzt wird, welcher zwischen radial nach außen hervorspringenden ringförmigen Stegen auf den Außenseite von Vorder- und Hinterglied (1, 2) dichtend aufgenommen wird, wobei mindestens zwei Ankerstangen zum Zusammenhalten des Gliederblockes vorgesehen sind..

2. Gliederheizkessel nach Anspruch 1,
**dadurch gekennzeichnet, dass** zum Ausbilden eines ringförmigen Spaltes (9, 10) jeweils zwei benachbarte Glieder (1, 2, 3, 7) eine einander zugeordnete Geometrie aufweisen.

3. Gliederheizkessel nach den Ansprüchen 1 oder 2,
**dadurch gekennzeichnet, dass** ein ringförmiger Spalt (9, 10) im rechten Winkel zur Mittelachse des Brennraumes (4) im Primärabschnitt (P) radial und gerade nach außen und im Sekundärabschnitt (S) nach innen verläuft.

4. Gliederheizkessel nach den Ansprüchen 1 oder 2,
**dadurch gekennzeichnet, dass** ein ringförmiger Spalt (9, 10) im Primärabschnitt (P) radial gekrümmt nach außen und im Sekundärabschnitt (S) nach innen verläuft.

5. Gliederheizkessel nach den Ansprüchen 1 oder 2,
**dadurch gekennzeichnet, dass** ein ringförmiger Spalt (9, 10) im Primärabschnitt (P) mit Schrägstellung zur Mittelachse des Brennraumes (4) gerade nach außen und im Sekundärabschnitt (S) nach innen verläuft.

6. Gliederheizkessel nach den Ansprüchen 1 oder 2,
**dadurch gekennzeichnet, dass** ein ringförmiger Spalt (9, 10) im Primärabschnitt (P) in radialer Richtung wellenförmig nach außen und im Sekundärabschnitt (S) nach innen verläuft.

7. Gliederheizkessel nach einem der Ansprüche 1 bis 6,
**dadurch gekennzeichnet, dass** im Primärabschnitt (P) die Breite und/oder der freie Querschnitt eines ringförmigen Spaltes (9) vom Brennraum (4) bis zur Ausmündung auf der Außenseite der Glieder (1, 2, 3) hin abnehmen und dass im Sekundärabschnitt (S) die Breite und/oder der freie Querschnitt eines ringförmigen Spaltes (10) vom Abgassammelraum (11) bis zum Abgasstutzen (12) nach innen hin abnimmt.

8. Gliederheizkessel nach einem der Ansprüche 1 bis 7,
**dadurch gekennzeichnet, dass** die Heizgas berührten Oberflächen der Glieder (1, 2, 3, 7), mindestens die den Spalt (9, 10) ausbildenden Oberflächen, mit einer Korrosionsschutzbeschichtung versehen sind.

9. Gliederheizkessel nach einem der Ansprüche 1 bis 8,
**dadurch gekennzeichnet, dass** die Naben (6, 6') zum Ausbilden einer Zwangsdurchströmung zwischen Rücklauf- und Vorlaufanschluss wechselseitig mit Verschlussmitteln (8) verschlossen sind.

10. Gliederheizkessel nach einem der Ansprüche 1 bis 8,
**dadurch gekennzeichnet, dass** mindestens eine Nabe (6, 6') zwischen dem Primärabschnitt (P) und dem Sekundärabschnitt (S) mit einem Verschlussmittel (8) verschlossen ist, dass der Vorlaufanschluss im Bereich des Primärabschnittes (P) und der Rücklaufanschluss im Bereich des Sekundärabschnittes (S) angeordnet ist, so dass das kühlere Rücklaufwasser zuerst in den Sekundärabschnitt (S) eintritt und danach in den Primärabschnitt (P) durch mindestens eine Nabe (6, 6') überströmt.

11. Gliederheizkessel nach einem der Ansprüche 1 bis 10,
**dadurch gekennzeichnet, dass** ein Brennraumboden-Mittelglied (7) zusätzlich vorgesehen ist, welches zusammen mit dem Vorderglied (1), und dem mindestens einen Mittelglied (3) den Brennraum (4) bildet und diesen in der Tiefe begrenzt.

12. Gliederheizkessel nach Anspruch 11,
**dadurch gekennzeichnet, dass** das Vorderglied (1) und das mindestens eine Mittelglied (3) wasser- und heizgasseitig zum Primärabschnitt (P) gehören, und dass das Hinterglied (2) und
das Brennraumboden-Mittelglied (7) mindestens wasserseitig den Sekundärabschnitt (S) bilden, indem mindestens eine Nabe (6, 6') zwischen dem Brennraumboden-Mittelglied (7) und dem benachbarten Mittelglied (3) verschlossen ist.

13. Gliederheizkessel nach Anspruch 11,
**dadurch gekennzeichnet, dass** das den Sekundärabschnitt (S) bildende Hinterglied (2) und
das Brennraumboden-Mittelglied (7) durch mindestens ein zugeordnetes weiteres Mittelglied zu ergänzen sind, so dass diese Glieder (2, 7) zusammen mindestens wasserseitig den Sekundärabschnitt bilden.

14. Gliederheizkessel nach Anspruch 11,
**dadurch gekennzeichnet, dass** das den Sekundärabschnitt (S) bildende Hinterglied (2) und
das Brennraumboden-Mittelglied (7) durch mindestens ein zugeordnetes weiteres Mittelglied zu ergänzen sind, so dass das Hinterglied (2) zusammen mit mindestens einem zugeordneten weiteren Mittelglied mindestens wasserseitig den Sekundärabschnitt (S) bilden, indem mindestens eine Nabe (6, 6') zwischen dem Brennraumboden-Mittelglied (7) und dem benachbarten weiteren Mittelglied verschlossen ist, wobei das Brennraumboden-Mittelglied (7) wasserseitig dem Primärabschnitt (P) zugeordnet ist.

15. Gliederheizkessel nach einem der Ansprüche 1 bis 14,
**dadurch gekennzeichnet, dass** der Abgasstutzen (12) auf der gemeinsamen Mittelachse von Gliedern (1, 2, 3, 7) und Brennraum (4) angeordnet ist.

16. Gliederheizkessel nach einem der Ansprüche 13 oder 14,
**dadurch gekennzeichnet, dass** Hinterglied (2), Brennraumboden-Mittelglied (7) und das mindestens eine weitere Mittelglied in Verlängerung des Abgasstutzens (12) mindestens ein Durchbrechung (15) aufweisen, und dass diese innerhalb des Brennraumboden-Mittelgliedes (7) mit einem Verschlussstopfen (16) heizgasseitig verschlossen ist.

## Claims

1. Sectional boiler made of cast iron or aluminium, in particular a condensing boiler, with essentially annular sections (1, 2, 3, 7), wherein a front section (1), a rear section (2) and at least one middle section (3) are provided, which sections form a combustion chamber (4) with essentially surrounding hot gas flues and the annular water spaces (5) of said sections are connected to one another via collars (6, 6'), with a return flow connection and a forward flow connection, an exhaust gas connector (12),
wherein as heating gas flues there are in each case provided annular gaps (9, 10) between two adjacent sections (1, 2, 3, 7), and wherein the heating gas flues are divided into a primary portion (P) and a secondary portion (S), wherein in the primary portion the heating gas flues respectively run, proceeding from the combustion chamber (4), approximately radially outwards and discharge into an exhaust gas manifold (11) on the outer side of the sections (1, 2, 3, 7), wherein the heating gases flow there into the secondary portion (S) and wherein in the secondary portion (S) at least one heating gas flue runs, proceeding from the exhaust gas manifold (11), approximately radially inwards to an exhaust gas connector (12),
**characterized in that**
the exhaust gas manifold (11) extends on the outer side of the sections (1, 2, 3, 7) as a hollow cylinder around the outer lateral surfaces of the sections (1, 2, 3, 7), and is outwardly bounded by a jacket (13) which is accommodated in sealing fashion between radially outward-projecting annular webs on the outer side of the front and rear sections (1, 2), wherein at least two anchor rods are provided for holding the section block together.

2. Sectional boiler according to Claim 1,
**characterized in that**, for forming an annular gap (9, 10), in each case two adjacent sections (1, 2, 3, 7) have a mutually matching shape.

3. Sectional boiler according to Claim 1 or 2,
**characterized in that** an annular gap (9, 10) at right angles to the central axis of the combustion chamber (4) runs radially and straight outwards in the primary portion (P) and inwards in the secondary portion (S).

4. Sectional boiler according to Claim 1 or 2,
**characterized in that** an annular gap (9, 10) runs in a radially curved manner outwards in the primary portion (P) and inwards in the secondary portion (S).

5. Sectional boiler according to Claim 1 or 2,
**characterized in that** an annular gap (9, 10) runs straight outwards diagonally with respect to the central axis of the combustion chamber (4) in the primary portion (P) and inwards in the secondary portion (S).

6. Sectional boiler according to Claim 1 or 2,
**characterized in that** an annular gap (9, 10) runs radially outwards in a wave shape in the primary portion (P) and inwards in the secondary portion (S).

7. Sectional boiler according to one of Claims 1 to 6,
**characterized in that** in the primary portion (P) the width and/or the free cross section of an annular gap (9) decreases from the combustion chamber (4) to the mouth at the outer side of the sections (1, 2, 3) and **in that** in the secondary portion (S) the width and/or the free cross section of an annular gap (10) decreases inwards from the exhaust gas manifold (11) to the exhaust gas connector (12).

8. Sectional boiler according to one of Claims 1 to 7,
**characterized in that** those surfaces of the sections (1, 2, 3, 7) which are in contact with the heating gas, at least the surfaces forming the gap (9, 10), are provided with a corrosion protection coating.

9. Sectional boiler according to one of Claims 1 to 8,
**characterized in that** the collars (6, 6') are closed on alternate sides with closure means (8) in order to form a forced throughflow between the return flow connection and the forward flow connection.

10. Sectional boiler according to one of Claims 1 to 8,
**characterized in that** at least one collar (6, 6') between the primary portion (P) and the secondary portion (S) is closed with a closure means (8), **in that** the forward flow connection is arranged in the region of the primary portion (P) and the return flow connection is arranged in the region of the secondary portion (S), such that the cooler return flow water first enters the secondary portion (S) and then flows into the primary portion (P) via at least one collar (6, 6').

11. Sectional boiler according to one of Claims 1 to 10,
**characterized in that** there is additionally provided a combustion chamber bottom middle section (7) which, together with the front section (1) and the at least one middle section (3), forms the combustion chamber (4) and forms the bottom boundary of the latter.

12. Sectional boiler according to Claim 11,
**characterized in that** the front section (1) and the at least one middle section (3) belong, on the water and heating gas side, to the primary portion (P), and **in that** the rear section (2) and the combustion chamber bottom middle section (7) form, at least on the water side, the secondary portion (S), by virtue of at least one collar (6, 6') between the combustion chamber bottom middle section (7) and the adjacent middle section (3) being closed.

13. Sectional boiler according to Claim 11,
**characterized in that** the rear section (2) forming the secondary portion (S) and the combustion chamber bottom middle section (7) are to be complemented by at least one associated further middle section, such that these sections (2, 7) together form, at least on the water side, the secondary portion.

14. Sectional boiler according to Claim 11,
**characterized in that** the rear section (2) forming the secondary portion (S) and the combustion chamber bottom middle section (7) are to be complemented by at least one associated further middle section, such that the rear section (2) together with at least one associated further middle section form, at least on the water side, the secondary portion (S), by virtue of at least one collar (6, 6') between the combustion chamber bottom middle section (7) and the adjacent further middle section being closed, wherein the combustion chamber bottom middle section (7) is assigned on the water side to the primary portion (P).

15. Sectional boiler according to one of Claims 1 to 14,
**characterized in that** the exhaust gas connector (12) is arranged on the common central axis of the sections (1, 2, 3, 7) and the combustion chamber (4).

16. Sectional boiler according to either of Claims 13 and 14,
**characterized in that** the rear section (2), the combustion chamber bottom middle section (7) and the at least one further middle section have, in the extension of the exhaust gas connector (12), at least one through opening (15), and **in that** this through opening is closed on the heating gas side, within the combustion chamber bottom middle section (7), with a closure stopper (16).

## Revendications

1. Chaudière sectionnée en fonte ou en aluminium, en particulier chaudière à condensation, comprenant des organes (1, 2, 3, 7) essentiellement annulaires, un organe avant (1), un organe arrière (2) et au moins un organe central (3) étant prévus, lesquels forment une chambre de combustion (4) avec des conduits de gaz chaud essentiellement périphériques et leurs chambres d'eau annulaires (5) sont en liaison les unes avec les autres par le biais de moyeux (6, 6'), comprenant un raccord de retour, un raccord d'arrivée et une tubulure de gaz d'échappement (12),
des interstices annulaires (9, 10) entre deux organes adjacents (1, 2, 3, 7) étant prévus à chaque fois en tant que conduits de gaz chaud, les conduits de gaz chaud étant divisés en une portion primaire (P) et une portion secondaire (S), les conduits de gaz chaud s'étendant à chaque fois approximativement radialement vers l'extérieur à partir de la chambre de combustion (4) dans la portion primaire et débouchant dans une chambre de collecte de gaz d'échappement (11) sur le côté extérieur des organes (1, 2, 3, 7), les gaz chauds s'y écoulant dans la portion secondaire (S) et, dans la portion secondaire (S), au moins un conduit de gaz chaud s'étendant approximativement radialement vers l'intérieur à partir de la chambre de collecte de gaz d'échappement (11) jusqu'à une tubulure de gaz d'échappement (12),
**caractérisée en ce que**
la chambre de collecte de gaz d'échappement (11) s'étend sur le côté extérieur des organes (1, 2, 3, 7) en tant que cylindre creux autour des surfaces d'enveloppe extérieures des organes (1, 2, 3, 7), et est limitée vers l'extérieur par une enveloppe (13) qui est reçue de manière étanche entre des nervures annulaires faisant saillie radialement vers l'extérieur sur le côté extérieur à partir de l'organe avant et de l'organe arrière (1, 2), au moins deux tiges d'ancrage pour maintenir ensemble le bloc d'organes étant prévues.

2. Chaudière sectionnée selon la revendication 1,
**caractérisée en ce que**, pour réaliser un interstice annulaire (9, 10), deux organes adjacents (1, 2, 3, 7) présentent à chaque fois des géométries associées l'une à l'autre.

3. Chaudière sectionnée selon les revendications 1 ou 2,
**caractérisée en ce qu'**un interstice annulaire (9, 10) à angle droit par rapport à l'axe médian de la chambre de combustion (4) s'étend radialement et de manière rectiligne vers l'extérieur dans la portion primaire (P) et s'étend vers l'intérieur dans la portion secondaire (S).

4. Chaudière sectionnée selon les revendications 1 ou 2,
**caractérisée en ce qu'**un interstice annulaire (9, 10) s'étend radialement de manière courbée vers l'extérieur dans la portion primaire (P) et s'étend vers l'intérieur dans la portion secondaire (S).

5. Chaudière sectionnée selon les revendications 1 ou 2,
**caractérisée en ce qu'**un interstice annulaire (9, 10) s'étend de manière rectiligne vers l'extérieur en position inclinée par rapport à l'axe médian de la chambre de combustion (4) dans la portion primaire (P) et s'étend vers l'intérieur dans la portion secondaire (S).

6. Chaudière sectionnée selon les revendications 1 ou 2,
**caractérisée en ce qu'**un interstice annulaire (9, 10) s'étend de manière ondulée vers l'extérieur dans la direction radiale dans la portion primaire (P) et s'étend vers l'intérieur dans la portion secondaire (S).

7. Chaudière sectionnée selon l'une quelconque des revendications 1 à 6,
**caractérisée en ce que**, dans la portion primaire (P), la largeur et/ou la section transversale libre d'un interstice annulaire (9) diminuent à partir de la chambre de combustion (4) jusqu'à l'embouchure sur le côté extérieur des organes (1, 2, 3), et **en ce que**, dans la portion secondaire (S), la largeur et/ou la section transversale libre d'un interstice annulaire (10) diminuent vers l'intérieur à partir de la chambré de collecte de gaz d'échappement (11) jusqu'à la tubulure de gaz d'échappement (12).

8. Chaudière sectionnée selon l'une quelconque des revendications 1 à 7,
**caractérisée en ce que** les surfaces, en contact avec le gaz chaud, des organes (1, 2, 3, 7), au moins les surfaces formant l'interstice (9 10), sont pourvues d'un revêtement de protection contre la corrosion.

9. Chaudière sectionnée selon l'une quelconque des revendications 1 à 8,
**caractérisée en ce que** les moyeux (6, 6') sont fermés en alternance par des moyens de fermeture (8) pour réaliser un écoulement forcé entre le raccord de retour et le raccord d'arrivée.

10. Chaudière sectionnée selon l'une quelconque des revendications 1 à 8,
**caractérisée en ce qu'**au moins un moyeu (6, 6') est fermé par un moyen de fermeture (8) entre la portion primaire (P) et la portion secondaire (S), **en ce que** le raccord d'arrivée est disposé dans la région de la portion primaire (P) et le raccord de retour est disposé dans la région de la portion secondaire (S), de telle sorte que l'eau de retour plus froide entre tout d'abord dans la portion secondaire (S) puis s'écoule dans la portion primaire (P) à travers au moins un moyeu (6, 6').

11. Chaudière sectionnée selon l'une quelconque des revendications 1 à 10,
**caractérisée en ce qu'**un organe central de fond de chambre de combustion (7) est en outre prévu, lequel forme, conjointement avec l'organe avant (1) et l'au moins un organe central (3), la chambre de combustion (4) et limite la profondeur de celle-ci.

12. Chaudière sectionnée selon la revendication 11,
**caractérisée en ce que** l'organe avant (1) et l'au moins un organe central (3) appartiennent à la portion primaire (P) du côté eau et gaz chaud, et **en ce que** l'organe arrière (2) et l'organe central de fond de chambre de combustion (7) forment la portion secondaire (S) au moins du côté eau, par le fait qu'au moins un moyeu (6, 6') est fermé entre l'organe central de fond de chambre de combustion (7) et l'organe central adjacent (3).

13. Chaudière sectionnée selon la revendication 11,
**caractérisée en ce que** l'organe arrière (2) formant la portion secondaire (S) et l'organe central de fond de chambre de combustion (7) doivent être complétés par au moins un organe central supplémentaire associé, de telle sorte que ces organes (2, 7) forment conjointement la portion secondaire au moins du côté eau.

14. Chaudière sectionnée selon la revendication 11, **caractérisée en ce que** l'organe arrière (2) formant la portion secondaire (S) et l'organe central de fond de chambre de combustion (7) doivent être complétés par au moins un organe central supplémentaire associé, de telle sorte que l'organe arrière (2) forme, conjointement avec au moins un organe central supplémentaire associé, la portion secondaire (S) au moins du côté eau, par le fait qu'au moins un moyeu (6, 6') est fermé entre l'organe central de fond de chambre de combustion (7) et l'organe central adjacent supplémentaire, l'organe central de fond de chambre de combustion (7) étant associé à la portion primaire (P) du côté eau.

15. Chaudière sectionnée selon l'une quelconque des revendications 1 à 14,
**caractérisée en ce que** la tubulure de gaz d'échappement (12) est disposée sur l'axe médian commun des organes (1, 2, 3, 7) et de la chambre de combustion (4).

16. Chaudière sectionnée selon l'une quelconque des revendications 13 ou 14,
**caractérisée en ce que** l'organe arrière (2), l'organe central de fond de chambre de combustion (7) et l'au moins un organe central supplémentaire comprennent au moins une ouverture (15) dans le prolongement de la tubulure de gaz d'échappement (12), et **en ce que** cette ouverture est fermée du côté gaz chaud par un obturateur de fermeture (16) à l'intérieur de l'organe central de fond de chambre de combustion (7).
